Europäisches Patentamt

European Patent Office

Office européen des brevets

(11) Numéro de publication: **0 234 990**
**A1**

## (12) DEMANDE DE BREVET EUROPEEN

(21) Numéro de dépôt: 87400145.6

(22) Date de dépôt: 22.01.87

(51) Int. Cl.³: **G 02 B 6/38**

(30) Priorité: 24.01.86 FR 8601016

(43) Date de publication de la demande:
02.09.87 Bulletin 87/36

(84) Etats contractants désignés:
AT BE CH DE ES GB IT LI LU NL SE

(71) Demandeur: SOURIAU ET CIE
9-13, rue du Général Galliéni
F-92103 Boulogne-Billancourt(FR)

(72) Inventeur: Crosnier, Jean-Jacques
12, rue Mordillat
F-92260 Fontenay-aux-roses(FR)

(72) Inventeur: Mendez, Michel de
7, voie de l'Etoile du Mesnil
F-91310 Monthléry(FR)

(72) Inventeur: Maurin, Joel
96, rue Cambronne
F-75015 Paris(FR)

(74) Mandataire: Martin, Jean-Jacques et al,
Cabinet REGIMBEAU 26, Avenue Kléber
F-75116 Paris(FR)

(54) Procédé et appareillage pour positionner et immobiliser une terminaison de fibre optique dans un embout de connexion, embout de connexion et connecteur optique ainsi réalisés.

(57) L'invention a pour objet la réalisation d'un contact optique, c'est-à-dire le positionnement et l'immobilisation d'une terminaison (5) de fibre optique dans un embout de connexion (4). Selon l'invention : on insère dans l'embout la terminaison de manière à laisser subsister pour cette dernière un jeu transversal à l'intérieur de l'embout ; on injecte (120, 110) axialement dans le coeur de la fibre un signal optique par la face d'extrémité (6) de la terminaison ; on capte (110, 130, 140) le signal renvoyé par cette même face d'extrémité, en un point de celleci correspondant à un axe de référence prédéfini ; on déplace transversalement (210, 220 210', 220') la terminaison dans l'embout par rapport à l'axe de référence jusqu'à une position à laquelle l'amplitude du signal capté ($S_w$) est maximale, de sorte que cette position correspond à un alignement de l'axe du coeur de la fibre sur l'axe de référence ; on immobilise en cette position la terminaison dans l'embout.

EP 0 234 990 A1

./...

FIG_1

## PROCEDE ET APPAREILLAGE POUR POSITIONNER ET IMMOBILISER UNE TERMINAISON DE FIBRE OPTIQUE DANS UN EMBOUT DE CONNEXION, EMBOUT DE CONNEXION ET CONNECTEUR OPTIQUE AINSI REALISES.

La présente invention concerne un procédé et un appareillage pour positionner et immobiliser une terminaison de fibre optique dans un embout de connexion, ainsi qu'un embout de connexion et un connecteur optique réalisés par ce procédé.

Il s'agit de réaliser un "contact optique" à l'extrémité d'une fibre, c'est-à-dire de pourvoir cette extrémité d'un embout de connexion qui pourra ensuite être introduit dans différents types de connecteurs. En particulier, pour le raccordement de deux fibres entre elles, on réunira les deux contacts optiques respectifs ainsi réalisés dans une embase commune comportant deux logements femelles en vis-à-vis recevant les embouts et permettant la mise en contact des faces d'extrémité des fibres.

Le problème posé par le raccordement de deux fibres optiques consiste essentiellement à mettre en coïncidence les axes optiques des coeurs de celles-ci, pour obtenir une perte d'insertion la plus faible possible.

Dans le cas d'un raccordement par réunion de deux contacts optiques, il s'agit de préparer individuellement chaque terminaison de fibre avec un centrage optimal du coeur de la fibre sur un axe de référence de l'embout. Si les coeurs sont parfaitement centrés dans les embouts, alors les défauts d'alignement ne proviendront que des tolérances mécaniques de l'embout et de l'embase et du jeu résiduel entre les éléments, défauts qui peuvent être réduits à de très faibles valeurs (de l'ordre de 0,2 à 0,3 µm) avec les meilleures technologies actuelles.

La difficulté vient du fait qu'il s'agit en fait d'aligner deux axes fictifs, non matérialisés, et que l'alignement des gaines optiques qui entourent les coeurs des deux fibres ne réalise pas nécessairement l'alignement des coeurs, dans la mesure où une légère excentration existe toujours en pratique entre le coeur et la gaine optique d'une fibre donnée.

Cet inconvénient n'est pas trop gênant dans le cas des fibres multimodes, c'est-à-dire des fibres dont le diamètre du coeur est très supérieur à la longueur d'onde propagée ; par exemple pour une fibre 50/125 (diamètre de coeur 50 µm et diamètre de gaine optique 125 µm), un désalignement des coeurs de 3 µm produit une perte d'insertion de 0,5 dB environ.

Par contre, dans le cas des fibres monomode (c'est-à-dire ayant un diamètre de coeur (pour une fibre à saut d'indice) ou un diamètre de coeur équivalent (pour une fibre à gradient d'indice) du même ordre de grandeur que la longueur d'onde propagée), pour arriver à une même valeur de perte d'insertion, il est nécessaire d'atteindre une précision d'alignement de l'ordre de 0,3 µm.

Or aucune fabrication actuelle de fibre monomode ne garantit une telle concentricité entre l'axe du coeur et la surface extérieure de la gaine optique ; les valeurs de tolérance généralement observées sont de l'ordre de ± 1 à 5 µm.

Les solutions jusqu'à présent proposées pour centrer avec précision une terminaison de fibre optique dans un embout de connexion - tout particulièrement dans le cas d'une fibre monomode - prévoient d'injecter de la lumière dans la fibre, soit par l'autre extrémité de la fibre, soit par une région proche de l'extrémité à raccorder, que l'on courbe pour pouvoir y injecter un signal optique. Après transmission par la fibre, le signal est observé par un viseur microscopique, et la terminaison de fibre est micromanipulée par l'opérateur jusqu'à obtenir un centrage optimal de la tache lumineuse (correspondant au coeur de la fibre) sur le réticule du système de visée.

Ces procédés classiques de centrage présentent cependant un certain nombre d'inconvénients, en particulier le fait que la qualité de la manipulation dépend de l'habilité de l'opérateur.

Par ailleurs, pour mettre en oeuvre le premier procédé (injection par l'autre extrémité), le connecteur doit être monté en laboratoire ou en usine sur seulement une amorce de fibre, et un épissurage en chantier sur la fibre proprement dite sera nécessaire.

Dans le cas du second procédé, la nécessité d'injecter un signal optique en courbant la fibre crée un risque d'application de contraintes excessives à la fibre ; de plus, il est nécessaire de dénuder celle-ci dans le cas où il est prévu un gainage mécanique opaque recouvrant la gaine optique. Par ailleurs, un travail précis sur le terrain est toujours rendu difficile en raison de la mauvaise accessibilité des éléments, de la pollution ambiante, des mauvaises conditions de travail, ....

L'un des buts de l'invention est de résoudre ces difficultés, en proposant un procédé de positionnement d'une terminaison de fibre optique dans un embout de connexion, qui ne nécessite pas d'intervenir sur une partie autre que l'extrémité de fibre pour injecter et transmettre un signal optique, et qui permette un centrage avec une très grande précision et sans qu'intervienne un facteur personnel quelconque d'appréciation par l'opérateur.

Bien que l'invention s'applique très avantageusement à l'alignement des fibres monomode, elle peut très bien être utilisée avec intérêt pour les fibres multimodes, grâce à la précision élevée et à la grande facilité de manipulation qu'elle procure.

A cet effet, le procédé selon l'invention consiste à :

. insérer dans l'embout la terminaison de manière à laisser subsister pour cette dernière un jeu transversal à l'intérieur de l'embout,

. injecter axialement dans le coeur de la fibre un signal optique par la face d'extrémité de la terminaison,

. capter le signal renvoyé par cette même face d'extrémité, en un point de celle-ci correspondant à un axe de référence prédéfini,

. déplacer transversalement la terminaison dans l'embout par rapport à l'axe de référence, selon au moins une direction, jusqu'à une position à laquelle l'amplitude du signal capté - ou de la composante du signal capté représentative de la position de la terminaison de fibre - passe par un extremum, de sorte que cette position correspond à un alignement de l'axe du coeur de la fibre sur l'axe de référence,

. immobiliser en cette position la terminaison dans l'embout.

On constate que, dans la mesure où le signal optique est désormais injecté depuis l'avant de l'embout, il n'est plus nécessaire de courber la fibre en arrière de l'embout (avec dénudage éventuel), ou toute autre intervention analogue, puisqu'il n'y a plus transmission d'un signal optique sur une longueur de fibre, mais seulement captation du signal renvoyé à l'endroit où celui-ci est injecté.

Le signal renvoyé par la face d'extrémité résulte de la combinaison de plusieurs phénomènes optiques, principalement la réflexion en surface de la face d'extrémité (rétroréflexion de Fresnel), la réflexion en profondeur dans la fibre (phénomène dit de rétrodiffusion, en particulier diffusion de Rayleigh) et, dans le cas où la captation du signal est effectuée par un capteur à fibre optique, couplage des modes de propagation entre la fibre à centrer et la fibre du capteur.

Avantageusement, en outre :

. en même temps que l'on injecte le signal optique, on module celui-ci en amplitude,

. on démodule le signal optique capté, de manière à obtenir une valeur de mesure continue représentative de l'amplitude du signal renvoyé par la fibre.

Dans un premier mode de réalisation, la modulation est une modulation géométrique, c'est-à-dire une modulation de la distance entre la fibre à centrer et la fibre du capteur ; dans ce cas, le signal optique est modulé sous l'effet d'au moins une vibration transversale ayant une composante parallèle à la direction de déplacement, cette vibration éloignant et rapprochant alternativement, parallèlement à eux-mêmes, l'axe du coeur et l'axe de référence.

Les opérations respectives de centrage de la fibre selon les deux directions correspondant aux deux degrés de liberté de celle-ci peuvent être réalisées soit successivement, soit simultanément.

Il est possible, dans ce dernier cas, de soumettre le signal optique à une double modulation sous l'effet de deux vibrations transversales simultanées, produites à deux fréquences différentes et non harmoniques entre elles.

Dans un second mode de réalisation, la modulation du signal optique est simplement une modulation optique de la puissance du faisceau du dispositif pour injecter le signal optique dans la fibre, par exemple par utilisation d'une source de lumière pulsée, ou modulation par interposition dans le faisceau d'une cellule électrooptique, ou tout autre moyen analogue.

La démodulation est de préférence une démodulation synchrone effectuée à la fréquence de modulation du signal optique, ce qui permet notamment une amélioration du rapport signal/bruit pour le signal capté.

De préférence :

. il est prévu une étape préalable consistant à fixer à l'extrémité libre de la terminaison une virole en matériau ferromagnétique,

. la terminaison est soutenue et déplacée par suspension magnétique de la virole sous l'effet de champs magnétiques appliqués depuis l'extérieur de l'embout.

Dans ce cas, la suspension magnétique peut avantageusement être asservie à l'amplitude du signal capté, de manière à déplacer la terminaison dans le sens produisant une augmentation de cette amplitude.

L'immobilisation de la terminaison dans l'embout peut être réalisée par durcissement d'une colle remplissant l'espace libre existant dans l'embout entoure de la terminaison. La présence de colle à cet endroit permet en outre, avant durcissement, d'assurer un certain amortissement en évitant des déplacements trop brusques de la terminaison de fibre, ce qui est particulièrement intéressant dans le cas d'une suspension magnétique.

On peut employer une colle dont le durcissement est provoqué par une irradiation en lumière ultraviolette, cette irradiation étant déclenchée lorsque l'amplitude du signal capté atteint sa valeur maximale.

L'invention concerne également un appareillage pour la mise en oeuvre du procédé.

Cet appareillage comprend :

. des moyens optiques et électroniques, pour injecter axialement dans le coeur de la fibre un signal optique par la face d'extrémité de la terminaison et capter le signal renvoyé par cette même face d'extrémité, en un point de celle-ci correspondant à un axe de référence prédéfini,

. des moyens de micromanipulation, pour déplacer transversalement la terminaison dans l'embout par rapport à l'axe de référence, selon au moins une direction, jusqu'à une position à laquelle l'amplitude du signal capté est maximale, de sorte que cette position correspond à un alignement de l'axe du coeur de la fibre sur l'axe de référence.

Avantageusement, il est prévu en outre :

. des moyens pour moduler en amplitude le signal optique, et

. des moyens pour démoduler le signal optique capté, de manière à obtenir une valeur de mesure continue représentative de l'amplitude du signal renvoyé par la fibre.

Il peut être également prévu des moyens pour moduler le signal optique sous l'effet d'au moins une vibration transversale ayant une composante parallèle à la direction de déplacement, cette vibration éloignant et rapprochant alternativement, parallèlement à eux-mêmes, l'axe du coeur et l'axe de référence.

Les moyens pour capter le signal renvoyé peuvent comprendre un élément semiréfléchissant (lame semiréfléchissante, prisme séparateur, ....), ou bien un capteur à fibre optique comportant un coupleur optique (un capteur à fibre optique est un dispositif analysant la rétroréflexion produite par un obstacle situé en vis-à-vis de la face d'extrémité d'une fibre optique ; cette fibre est reliée, à son autre extrémité, à une source lumineuse et à une photo-cellule délivrant un signal électrique variable en fonction du taux de rétroréflexion. Ce type de capteur est déjà utilisé, notamment, comme détecteur et mesureur de proximité).

D'autres caractéristiques et avantages de l'invention apparaîtront à la lecture de la description détaillée ci-dessous, faite en référence aux dessins annexés, sur lesquels :

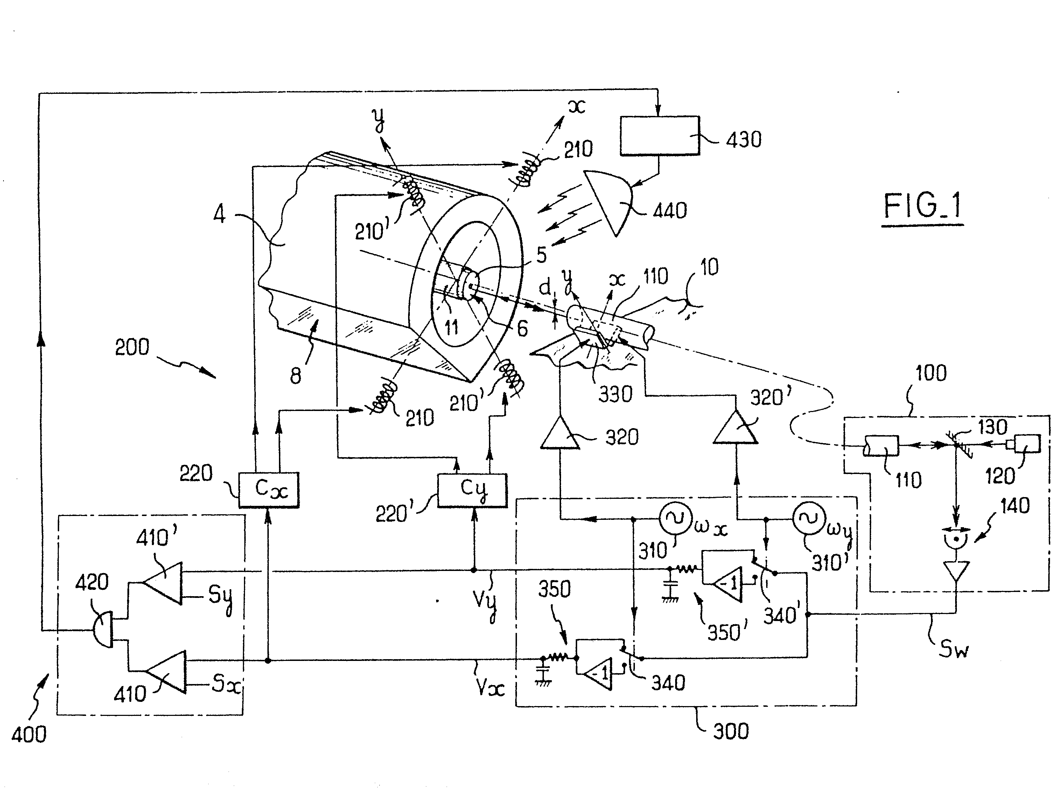

. la figure 1 montre schématiquement l'ensemble des éléments concernés par l'invention, avec les circuits électroniques de commande associés,

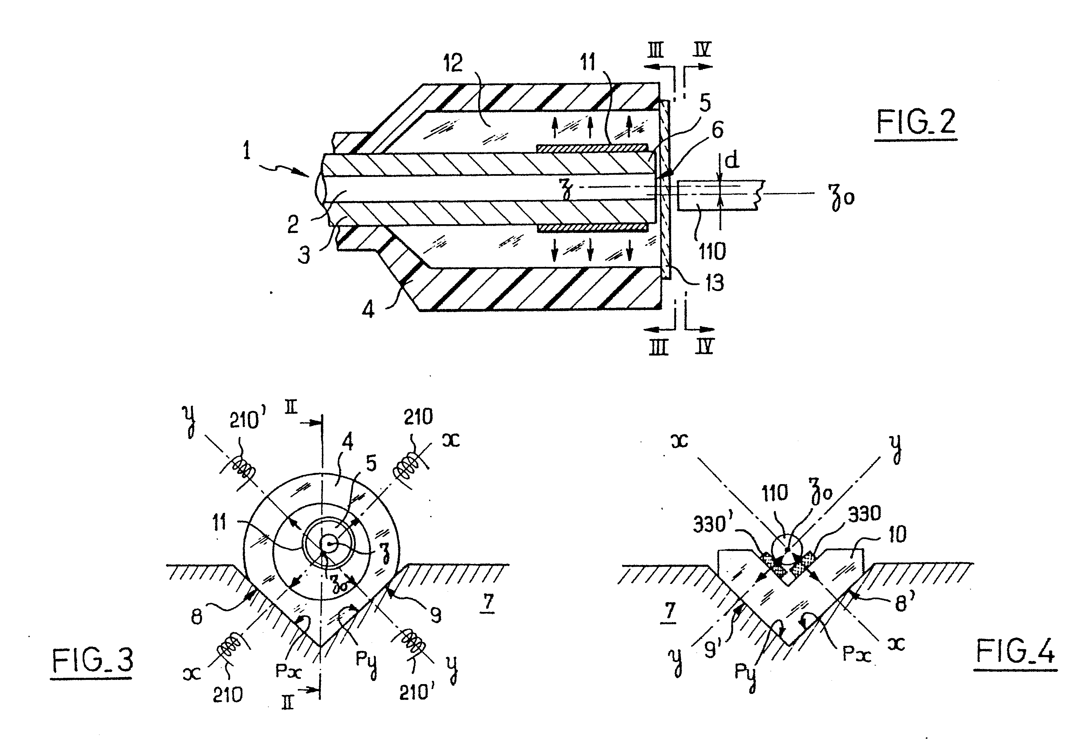

. la figure 2 est une vue en coupe, selon la ligne II-II de la figure 3, de la terminaison de fibre placée dans son embout,

. la figure 3 est une vue de face de la fibre et de l'embout, selon la direction III-III de la figure 2,

. la figure 4 est une vue de face, selon la direction IV-IV de la figure 2,

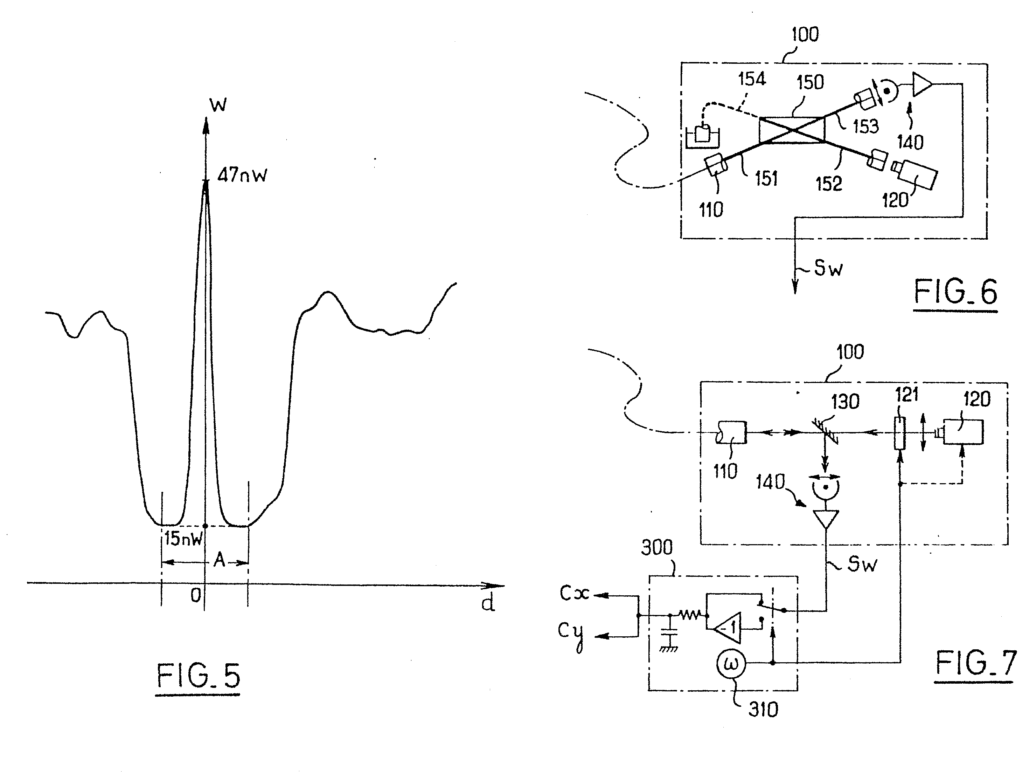

. la figure 5 montre des variations relevées du signal optique en fonction du désalignement variable de l'axe du coeur et de l'axe de référence,

. la figure 6 illustre une variante, utilisant un capteur à fibre comportant un coupleur optique,

. la figure 7 illustre une autre variante, dans laquelle la modulation du signal injecté est une modulation optique de la puissance du faisceau émis.

Sur les figures 1 à 4, la référence 1 désigne la fibre optique, comprenant un coeur 2 et une gaine optique 3 à centrer à l'intérieur de l'embout 4 (il peut s'agir indifféremment d'une fibre à saut d'indice ou d'une fibre à gradient d'indice ; dans ce dernier cas, on assimilera au diamètre du coeur le diamètre de coeur équivalent). L'embout 4 présente un diamètre intérieur supérieur au diamètre de la fibre, de sorte que la terminaison 5 de celle-ci présente un jeu transversal à l'intérieur de l'embout, selon deux degrés de liberté. On considèrera que les déplacements de la terminaison de fibre sont suffisamment faibles pour que cette dernière puisse être considérée comme se déplaçant parallèlement à elle-même, sans déplacement angulaire.

Le but de la manipulation est d'aligner l'axe z du coeur de la terminaison de fibre sur un axe de référence $z_O$, en appliquant un signal optique par la face d'extrémité 6 de la terminaison de fibre, et en analysant le signal renvoyé à ce même endroit.

L'axe $z_O$ est défini géométriquement, par exemple par rapport à deux faces de référence 8, 9 (figure 3) de l'embout. En effet, si l'on peut aligner parfaitement l'axe du coeur sur une position prédéterminée par rapport à des faces de référence de l'embout, un alignement de deux fibres pourra être réalisé en mettant deux embouts face à face et en faisant reposer ceux-ci dans un berceau commun présentant une gouttière en V homologue des deux faces 8 et 9 de chacun des deux embouts mis en vis-à-vis. Les techniques actuelles permettent de réaliser par un tel moyen un alignement des deux axes $z_0$ de chacun des embouts à environ 0,2 µm près. On voit que, si l'axe z peut être aligné sur l'axe $z_0$ défini par rapport à l'embout, on opère un "transfert de précision" faisant en sorte que la seule précision nécessaire est la précision mécanique d'alignement des embouts – qui peut être très grande –, dès lors que le coeur de la fibre a été parfaitement centré à l'intérieur de l'embout.

Pour procéder à ce centrage, on utilise un berceau 7 (figures 3 et 4) pourvu de deux plans de référence $P_x$ et $P_y$ sur lesquels reposent d'une part (figure 3) les faces 8 et 9 de l'embout et, d'autre part (figure 4) les faces homologues 8' et 9' d'une cale 10 usinée avec une très grande précision (par exemple une cale en quartz) recevant un dispositif optique, par exemple la fibre 110 d'un capteur à fibre optique, cette fibre ayant son coeur parfaitement centré de manière à définir avec la plus grande précision possible l'axe de référence $z_0$ par rapport aux plans de référence $P_x$ et $P_y$.

Pour injecter le signal optique dans la terminaison de fibre et analyser le signal renvoyé, il est prévu un dispositif 100, qui est par exemple un capteur à fibre optique de type classique, comme par exemple le modèle SOURIAU 80 84 CP ou tout autre capteur analogue. Ce dispositif comporte, face à la fibre 110, une source lumineuse 120, dont la longueur d'onde est, dans le cas d'une fibre monomode à aligner, du même ordre que la longueur d'onde pour laquelle la fibre est prévue, ou même peut être inférieure à cette valeur (par exemple une longueur d'onde de 0,85 µm pour des fibres monomode opérant à 1,3 ou 1,55 µm) ; il peut s'agir également d'une source laser hélium-néon. Par ailleurs, le faisceau peut, au lieu de se propager dans une fibre, se propager en espace libre.

Une lame semiréfléchissante 130 est interposée entre la fibre 110 et la source 120, pour diriger le signal renvoyé vers un détecteur 140 produisant, après amplification, un signal $S_W$ proportionnel à l'intensité du signal renvoyé par la face d'extrémité de la terminaison de fibre à aligner.

Il est prévu des moyens de micromanipulation 200 pour déplacer la terminaison de fibre à l'intérieur de l'embout de manière à maximiser le signal $S_W$.

Sur l'exemple illustré, on a représenté des moyens formant suspension électromagnétique comportant des paires de bobinage 210 et 210', disposées selon deux axes orthogonaux x, y (figure 3) commandés par des circuits 220, 220' et agissant sur une virole 11 en matériau ferromagnétique (fer doux, nickel, ....) préalablement fixée à l'extrémité libre de la terminaison de fibre, par exemple par collage ou sertissage.

On choisira dans ce cas un embout en matière plastique (qui est d'ailleurs le matériau le plus fréquemment employé) en raison de sa "transparence" aux champs magnétiques.

Le signal optique injecté dans le coeur de la fibre par la face d'extrémité 6 est en outre, de préférence, modulé en amplitude, le signal $S_W$ reçu étant alors démodulé par un circuit 300.

Sur le mode de réalisation illustré figures 1 à 4, la modulation est une modulation géométrique, obtenue en faisant vibrer transversalement la fibre 110 autour de l'axe $z_0$ selon deux directions ortho- gonales x et y, de préférence non confondues avec la direction de la pesanteur.

Cette vibration est par exemple obtenue au moyen de supports piézoélectriques 330, 330' (figure 4) interposés entre la fibre 110 et la cale 10, ces deux quartz pouvant être remplacés par un quartz unique excité de façon appropriée selon deux modes transversaux distincts.

Les quartz 330, 330' sont excités à des fréquences $\omega_x$ et $\omega_y$, non égales et non harmoniques entre elles, produites par des oscillateurs 310, 310' pilotant des circuits de puissance 320, 320'.

Le démodulateur 300 est avantageusement un démodulateur synchrone piloté par les mêmes oscillateurs $\omega_x$ et $\omega_y$ produisant la modulation du signal. Schématiquement, un démodulateur synchrone comporte un commutateur 340, 340' basculant, au rythme de la fréquence de modulation, entre deux bornes correspondant à une transmission directe du signal et à une transmission inversée de celui-ci ; en sortie, un étage intégrateur 350, 350' fait en sorte que la tension moyenne $V_x$, $V_y$ délivrée soit proportionnelle à l'amplitude de la composante à la fréquence $\omega_x$ ou $\omega_y$, respectivement, du signal $S_W$ appliqué au démodulateur. Dans ce cas de figure, la modulation/démodulation synchrone permet à la fois d'améliorer le rapport signal/bruit, d'éliminer la composante continue du signal $S_W$ (qui est sans intérêt, puisqu'on ne s'intéresse qu'aux variations de ce signal), et d'amplifier la composante alternative à la fréquence de modulation et à cette seule fréquence, en se débarrassant des signaux à toutes les fréquences voisines, y compris les multiples et sous-multiples de la fréquence de modulation.

Avantageusement, les signaux $V_x$ et $V_y$ sont transmis aux circuits de commande 220, 220', de manière à réaliser une boucle d'asservissement qui va centrer automatiquement la terminaison de fibre sur la position qui délivre le signal optique renvoyé de plus grande amplitude. Pour immobiliser la fibre à cette position optimale, on peut prévoir divers moyens.

Une possibilité consiste à remplir l'espace libre 12 (figure 2) existant à l'intérieur de l'embout d'une colle durcissable par exposition aux ultraviolets ; l'embout 13 est par exemple fermé par une cale transparente en verre 13 pour éviter que la colle ne coule.

On peut commander automatiquement le durcissement de la colle par un dispositif 400 recevant les signaux $V_x$ et $V_y$ en sortie du démodulateur et les comparant, par des comparateurs 410, 410', à des seuils $S_x$ et $S_y$. Lorsque l'un et l'autre seuils se trouvent dépassés, un signal apparaît en sortie de la porte ET 420, qui déclenche un circuit 430 de commande d'une lampe éclair 440 placée près de l'embout, de manière à irradier la colle et provoquer son durcissement.

La figure 5 montre la variation de la puissance W du signal renvoyé par la face des extrémités de la fibre en fonction du désaxement d des axes z et $z_o$. La seule région significative est la région A, la remontée de la puissance renvoyée au-delà de cette zone étant essentiellement due à des phénomènes parasites de rétroréflexion sur la gaine optique de la fibre, sur les régions périphériques, la colle, ..... Comme on peut le constater, le caractère très marqué de la variation de signal permet un centrage précis du coeur de la fibre.

La figure 6 représente une variante du dispositif 100, dans laquelle la lame semiréfléchissante 130 a été remplacée par un coupleur optique 150.

On connaît les coupleurs optiques, qui sont des dispositifs formés de deux fibres vrillées l'une sur l'autre avec fusion de la partie centrale, ou par greffage d'une extrémité de fibre sur la partie courbée d'une autre fibre. Ces coupleurs sont désignés "coupleurs en X" ou "coupleur en Y" selon qu'ils présentent quatre ou trois branches, respectivement. Des coupleurs appropriés sont par exemple les modèles CLTO 4053, 4056 ou 4060 commercialisés par la Compagnie Lyonnaise de Transmissions Optiques, qui sont des coupleurs en X pour fibres 50/125, ou le modèle CLTO 4054, qui est un coupleur en Y pour fibres 50/125 ; d'autres modèles de coupleurs existent pour tous les types de fibres, monomodes ou multimodes : on peut citer notamment comme coupleurs monomodes, les modèles SM4C (en X) et SM3C ( en Y) commercialisés par la Société CANSTAR.

Les deux branches opposées 151, 153 du coupleur correspondent à la fibre 110, le circuit détecteur 140 étant placé face à la branche 153. Le dispositif d'émission lumineuse 120 est placé face à l'extrémité de la branche 152. Quant à la branche 154, qui est optionnelle (elle n'existe que dans le cas d'un coupleur en X), il est prévu d'en faire une branche à évanouissement total (par exemple en trempant son extrémité dans un récipient contenant un liquide d'adaptation d'indice), pour éliminer toute onde de bruit.

Sur la figure 7, on a représenté une variante dans laquelle la modulation n'est plus une modulation géométrique (vibration imprimée à la fibre 110), mais une modulation optique, par exemple impulsionnelle, de la puissance du faisceau délivré par le dispositif d'émission lumineuse 120. Cette modulation peut être réalisée par interposition d'un système électromécanique 121 (par exemple à disque rotatif) commandé par l'oscillateur 310 ; elle peut être réalisée également en employant un émetteur pulsé, les pulsations étant dans ce cas déclenchées par l'oscillateur 310 précité.

Dans une autre variante, il serait possible de combiner la modulation optique de la puissance du faisceau illustré par la figure 7 avec un détecteur à fibre optique comportant un coupleur optique, comme illustré figure 6.

Enfin, dans les différents modes de réalisation illustrés, il peut être souhaitable de rajouter entre les deux fibres (fibre à centrer et fibre de détection) une goutte de liquide d'indice de manière à exalter la sensibilité de détection en diminuant les pertes d'énergie lumineuse.

REVENDICATIONS

1. Un procédé pour positionner et immobiliser une terminaison (5) de fibre optique (1) dans un embout de connexion (4), consistant à insérer dans l'embout la terminaison de manière à laisser subsister pour cette dernière un jeu transversal à l'intérieur de l'embout, et à injecter axialement dans le coeur (2) de la fibre un signal optique par la face d'extrémité (6) de la terminaison, caractérisé en ce qu'il consiste en outre à :
. capter le signal renvoyé par cette même face d'extrémité, en un point de celle-ci correspondant à un axe de référence prédéfini ($z_o$),
. déplacer transversalement la terminaison dans l'embout par rapport à l'axe de référence, selon au moins une direction, jusqu'à une position à laquelle l'amplitude du signal capté - ou de la composante du signal capté représentative de la position de la terminaison de fibre - passe par un extremum, de sorte que cette position correspond à un alignement de l'axe du coeur de la fibre (z) sur l'axe de référence ($z_o$),
. immobiliser en cette position la terminaison dans l'embout.

2. Un procédé selon la revendication 1, dans lequel, en outre :
. en même temps que l'on injecte le signal optique, on module celui-ci en amplitude,
. on démodule le signal optique capté, de manière à obtenir une valeur de mesure continue représentative de l'amplitude du signal renvoyé par la fibre.

3. Un procédé selon la revendication 1, dans lequel le signal optique est modulé sous l'effet d'au moins une vibration transversale ayant une composante parallèle à la direction de déplacement, cette vibration éloignant et rapprochant alternativement, parallèlement à eux-mêmes, l'axe du coeur (z) et l'axe de référence ($z_o$).

4. Un procédé selon la revendication 3, dans lequel on soumet le signal optique à une double modulation sous l'effet de deux vibrations transversales simultanées, produites à deux fréquences ($\omega_x$, $\omega_y$) différentes et non harmoniques entre elles.

5. Un procédé selon la revendication 2, dans lequel la démodulation est une démodulation synchrone effectuée à la fréquence de modulation du signal optique.

6. Un procédé selon l'une des revendications 1 à 5, dans lequel :
. il est prévu une étape préalable consistant à fixer à l'extrémité libre de la terminaison une virole (11) en matériau ferromagnétique,
. la terminaison est soutenue et déplacée par suspension magnétique de la virole sous l'effet de champs magnétiques appliqués depuis l'extérieur de l'embout.

7. Un procédé selon la revendication 6, dans lequel la suspension magnétique est asservie à l'amplitude du signal capté, de manière à déplacer la terminaison dans le sens produisant une augmentation de cette amplitude.

8. Un procédé selon la revendication 1, dans lequel l'immobilisation de la terminaison dans l'embout est réalisée par durcissement d'une colle remplissant l'espace libre (12) existant dans l'embout autour de la terminaison.

9. Un procédé selon la revendication 8, dans lequel la colle employée est une colle dont le durcissement est provoqué par une irradiation en lumière ultraviolette, cette irradiation étant déclenchée lorsque l'amplitude du signal capté atteint sa valeur maximale.

10. Un appareillage pour positionner une terminaison (5) de fibre optique (1) dans un embout de connexion (4), par mise en oeuvre d'un procédé selon l'une des revendications 1 à 9, caractérisé en ce qu'il comprend :

. des moyens optiques (100) et électroniques (300), pour injecter axialement dans le coeur (2) de la fibre un signal optique par la face d'extrémité (6) de la terminaison et capter le signal renvoyé par cette même face d'extrémité, en un point de celle-ci correspondant à un axe de référence prédéfini ($z_o$),

. des moyens de micromanipulation (200), pour déplacer transversalement la terminaison dans l'embout par rapport à l'axe de référence, selon au moins une direction, jusqu'à une position à laquelle l'amplitude du signal capté est maximale, de sorte que cette position correspond à un alignement de l'axe du coeur de la fibre (z) sur l'axe de référence ($z_o$).

11. Un appareillage selon la revendication 10, dans lequel il est prévu en outre :

. des moyens pour moduler en amplitude le signal optique, et

. des moyens (340-350) pour démoduler le signal optique capté, de manière à obtenir une valeur de mesure continue représentative de l'amplitude du signal renvoyé par la fibre.

12. Un appareillage selon la revendication 10, dans lequel il est prévu en outre des moyens (310-330 ; 310'-330') pour moduler le signal optique sous l'effet d'au moins une vibration transversale ayant une composante parallèle à la direction de déplacement, cette vibration éloignant et rapprochant alternativement, parallèlement à eux-mêmes, l'axe du coeur (z) et l'axe de référence ($z_o$).

13. Un appareillage selon la revendication 10, dans lequel les moyens pour capter le signal renvoyé comprennent un élément semiréfléchissant (130).

14. Un appareillage selon la revendication 10, dans lequel les moyens pour capter le signal renvoyé comprennent un capteur à fibre optique comportant un coupleur optique (150).

15. Un embout de connexion, caractérisé en ce qu'il est réalisé par le procédé selon l'une des revendications 1 à 9.

16. Un connecteur optique, caractérisé en ce qu'il comprend au moins un embout selon la revendication 15.

FIG_1

FIG.2

FIG.3

FIG.4

0234990

FIG.5

FIG.6

FIG.7

0234990

Office européen
des brevets

**RAPPORT DE RECHERCHE EUROPEENNE**

EP  87 40 0145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | FR-A-2 506 930  (THOMSON)<br>* Revendications; figures * | 1 | G 02 B    6/38 |
| X | FR-A-2 516 648  (THOMSON)<br>* Revendications; figures * | 1 | |
| Y | EP-A-0 129 456  (SOCAPEX)<br>*    Résumé;    revendications 1,3,5,6,7,13,14,15,16; figures * | 1 | |
| A | | 8,10,<br>13,15 | |
| Y | PATENT ABSTRACTS OF JAPAN, vol. 5, no. 130 (P-76)[802], 20 août 1981; & JP-A-56 69608 (NIPPON DENKI K.K.) 11-06-1981<br>* Résumé * | 1 | **DOMAINES TECHNIQUES RECHERCHES (Int Cl.4)**<br><br>G 02 B |
| Y | FR-A-2 564 985  (SOFYCOM)<br>* Revendications; figures * | 1 | |
| A | | 8,10,<br>15,16 | |
| A | DE-A-2 654 537  (LICENTIA)<br>* Revendications * | 1 | |
| | ---                -/- | | |

Le présent rapport de recherche a été établi pour toutes les revendications

| Lieu de la recherche<br>LA HAYE | Date d'achèvement de la recherche<br>25-04-1987 | Examinateur<br>PFAHLER R. |
|---|---|---|

Office européen
des brevets

**RAPPORT DE RECHERCHE EUROPEENNE**

**023499(**
Numero de la demande

EP 87 40 0145

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl 4) |
|---|---|---|---|
| A | PATENT ABSTRACTS OF JAPAN, vol. 1, no. 119 (E-77), 11 octobre 1977, page 4710 E 77; & JP-A-52 50248 (NIPPON DENSHIN DENWA KOSHA) 22-04-1977 * Résumé * | 1 | |
| | ----- | | |
| | | | **DOMAINES TECHNIQUES RECHERCHES (Int Cl.4)** |

Le présent rapport de recherche a été établi pour toutes les revendications

| Lieu de la recherche | Date d'achèvement de la recherche | Examinateur |
|---|---|---|
| LA HAYE | 25-04-1987 | PFAHLER R. |